# EUROPÄISCHE PATENTSCHRIFT

(11) **EP 2 132 822 B1**
(45) Veröffentlichungstag und Bekanntmachung des Hinweises auf die Patenterteilung: **07.12.2011**
(21) Anmeldenummer: 08716288.9
(22) Anmeldetag: 06.03.2008
(51) Int. Cl.: H01M 8/24

(54) **DICHTUNGSVORRICHTUNG FÜR EINE BRENNSTOFFZELLENANORDNUNG**
SEALING DEVICE FOR A FUEL CELL ARRANGEMENT
DISPOSITIF D'ÉTANCHÉITÉ POUR UN AGENCEMENT DE PILES À COMBUSTIBLE

(30) Priorität: 12.03.2007 DE 102007011793
(43) Veröffentlichungstag der Anmeldung: 16.12.2009
(73) Patentinhaber: MTU Onsite Energy GmbH, 85521 Ottobrunn (DE)
(72) Erfinder: BURMEISTER, Uwe, 81739 München (DE); WAGNER, Wolfgang, 85579 Neubiberg (DE)
(74) Vertreter: Winter, Josef
(86) Internationale Anmeldenummer: PCT/EP2008/001771
(87) Internationale Veröffentlichungsnummer: WO 2008/110292

(56) Entgegenhaltungen:
- WO-A-02/071523
- US-A- 4 414 294
- US-A- 6 033 793
- US-A1- 2006 141 325

## Beschreibung

Die Erfindung betrifft eine Dichtungsvorrichtung für eine Brennstoffzellenanordnung nach dem Oberbegriff des Anspruchs 1.

Brennstoffzellenanordnungen von der Art, für die die erfindungsgemäße Dichtungsvorrichtung vorgesehen ist, umfassen eine Vielzahl von zu einem Brennstoffzellenstapel zusammengefassten Brennstoffzellen, welche quer zur Längsrichtung des Stapels von in den Brennstoffzellen umgesetzten Gasströmen (Brenngas, Oxidationsgas, Abgas) durchströmbar sind. An der Längsseite des Brennstoffzellenstapels ist ein zum Zu- und Abführen der an den Brennstoffzellen umgesetzten Gasströme vorgesehener Gasverteiler (Manifold) vorgesehen, typischerweise jeweils einer an zwei einander gegenüberliegenden Längsseiten des Brennstoffzellenstapels. Zwischen dem Brennstoffzellenstapel und dem Gasverteiler ist eine Dichtungsvorrichtung vorgesehen, welche der gegenseitigen Abdichtung dieser beiden Elemente dient. Diese umfasst herkömmlich einen Dichtungsrahmen, der eine Anzahl von zwischen dem Längsrand des Gasverteilers und dem Brennstoffzellenstapel angeordneten Längsdichtungselementen enthält, die aus Gründen elektrischer Isolation aus einem dielektrischen Material bestehen.

Da die beim Aufheizen einer solchen Brennstoffzellenanordnung von Umgebungstemperatur auf typischerweise 650°C bzw. beim Abkühlen auftretenden großen Temperaturänderungen zu starken Relativbewegungen der dielektrischen Dichtungselemente führen, sind diese zwischen dem Brennstoffzellenstapel und dem Gasverteiler so angeordnet, dass sie in Längsrichtung in einem gewissen Maße beweglich sind, um die besagten Relativbewegungen aufnehmen zu können. An den Enden des Brennstoffzellenstapels sind üblicherweise zwischen den Querrändern des Gasverteilers und des Brennstoffzellenstapels angeordnete Querdichtungselemente vorgesehen, welche den Dichtungsrahmen der Dichtungsvorrichtung umfangsmäßig schließen.

Bisher wurden zum Ausgleich der besagten Relativbewegungen zwischen den Dichtungselementen durch in den aneinanderstoßenden Enden der Dichtungselemente ausgebildete Nuten eingesetzte Nutenleisten (Key-Gebelverbindungen) verwendet, bei denen die Dichtungselemente in seitlicher Richtung mittels Fixierstiften geführt werden, welche in Rund- oder Langlöchern in den Dichtungselementen aufgenommen sind. Nachteile dieser bekannten Lösung bestehen darin, dass aufgrund des notwendigen Passungsspiels in der besagten Key-Gabelverbindung eine ständige geringe Leckage auftritt, zum anderen sind die Dichtungselemente gefährdet in Bezug auf einen Bruch an der Key-Gabelverbindung bei seitlich auftretender Kraft.

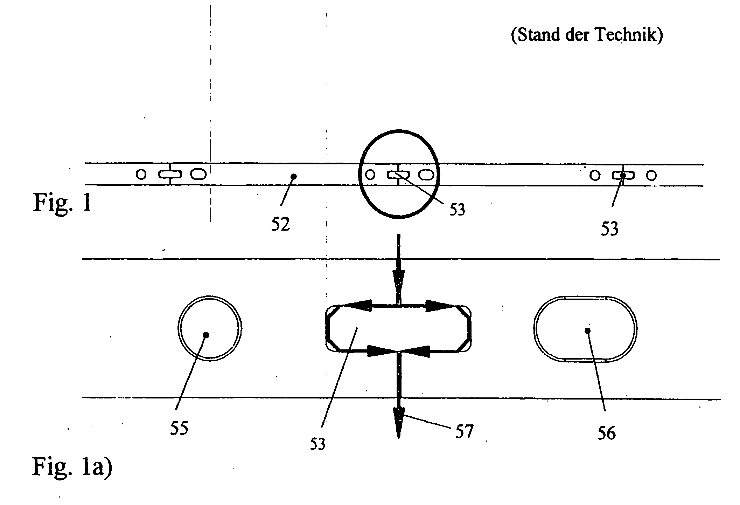

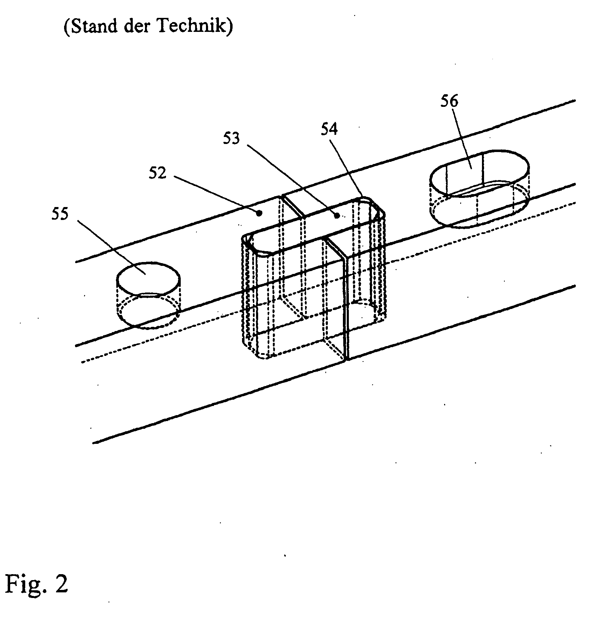

Die Figuren 1 und 2 zeigen In der Draufsicht (Fig. 1), in einer vergrößerte Ausnützdarstellung (Fig. 1a), sowie in einer perspektivischen Darstellung (Fig. 2) Details von herkömmlich verwendeten Längsdichtungselementen einer Dichtungsvorrichtung für eine solche Brennstoffzellenanordnung nach dem Stand der Technik. In Nuten 54 der aneinanderstoßenden Enden der Dichtungselemente sind Nutenleisten 53 (Key-Gabelverbindungen) eingesetzt. Die Dichtungselemente 52 sind in seitlicher Richtung mittels Fixierstiften geführt, welche in Fixierbohrungen oder -langlöchern 55, 56 in den Dichtungselementen aufgenommen sind. Die besagte Leckage in der Key. Gabelverbindung ist mit 57 bezeichnet.

Aus der US 2006/0141325 A1 geht eine Dichtungsvorrichtung als bekannt hervor, die einen Gasverteiler, einen aus mehreren Segmenten bestehenden Dichtungsrahmen, sowie eine Dichtung umfasst, die zwischen dem Brennstoffzellenstapel und dem Dichtungsrahmen angeordnet ist.

Der vorliegenden Erfindung liegt die Aufgabe zugrunde, eine verbesserte Dichtungsvorrichtung für eine Brennstoffzellenanordnung der eingangs angegebenen Art zu schaffen. Insbesondere soll eine Dichtungsvorrichtung geschaffen werden, bei welcher eine Leckage zwischen den Dichtungselementen praktisch ausgeschlossen ist, und die mechanisch robust ist.

Die Aufgabe wird durch eine Dichtungsvorrichtung mit den Merkmalen des Anspruchs 1 gelöst. Vorteilhafte Ausführungsformen und Weiterbildungen der erfindungsgemäßen Dichtungsvorrichtung sind in den Unteransprüchen angegeben.

Durch die Erfindung wird eine Dichtungsvorrichtung für eine Brennstoffzellenanordnung mit einer Vielzahl von zu einem Brennstoffzellenstapel zusammengefaßten Brennstoffzellen, welche quer zur Längsrichtung des Brennstoffzellenstapels von in den Brennstoffzellen umgesetzten Gasströmen durchströmbar sind, und einem an der Längsseite des Brennstoffzellenstapels zum Zu- und Abführen der an den Brennstoffzellen umgesetzten Gasströme vorgesehenen Gasverteiler geschaffen. Die Dichtungsvorrichtung umfaßt einen Dichtungsrahmen mit einer Anzahl von zwischen dem Längsrand des Gasverteilers und dem Brennstoffzellenstapel angeordneten, aus einem dielektrischen Material bestehenden Längsdichtungselementen, die zum Ausgleich von insbesondere thermisch bedingten Relativbewegungen zwischen Brennstoffzellenstapel und Gasverteilung in Längsrichtung beweglich angeordnet sind. Erfindungsgemäß ist es vorgesehen, dass die Längsdichtungselemente jeweils stirnseitig spaltfrei dicht aneinander anliegend angeordnet sind, und dass ein Spannsystem mit Spanneinrichtungen zur Erzeugung einer die Längsdichtungselemente in Längsrichtung zwischen den Enden des Dichtungsrahmens zusammendrückenden mechanischen Spannung vorgesehen ist.

Ein Vorteil der erfindungsgemäßen Dichtungsvorrichtung ist es, dass die eingangs beschriebenen aufwendigen, aus Nuten und in diese eingepassten Nutenleisten bestehenden Verbindungen (Key-Gabelverbindungen) entfallen und damit deren Nachteile, insbesondere eine ständige, geringe Leckage, und eine gewisse Bruchempfindlichkeit beseitigt sind. Der Belastungsfall für die Längsdichtungselemente ist besser, da sie nur noch auf Druck beansprucht werden.

Gemäß einer bevorzugten Ausführungsform der erfindungsgemäßen Dichtungsvorrichtung enthält das Spannsystem an beiden Enden des Dichtungsrahmens angeordnete Spanneinrichtungen, welche jeweils eine die Längsdichtungselemente von den Enden des Dichtungsrahmens in Längsrichtung zur Mitte hin zusammendrückende mechanische Spannung erzeugen. Auf diese Weise wird die die Längsdichtungselemente zusammendrückende und abdichtende mechanische Spannung gleichmäßig symmetrisch von beiden Enden des Dichtungsrahmens her erzeugt.

Bei dieser Ausführungsform kann insbesondere ein Längsdichtungselement in der Mitte der Längsausdehnung des Dichtungsrahmens unverschieblich angeordnet sein, zu welchem hin die längsbeweglich angeordneten Längsdichtungselemente von den Enden her zusammengedrückt werden.

Gemäß einer bevorzugten Ausführungsform sind die längsbeweglich angeordneten Längsdichtungselemente seitlich durch Führungselemente geführt.

Diese Führungselemente können durch Anschläge seitlich der Längsdichtungselemente gebildet sein.

Das in der Mitte befindliche unbeweglich angeordnete Dichtungselement kann durch Anschläge seitlich und in Längsrichtung fixiert sein.

Gemäß einer Ausführungsform der erfindungsgemäßen Dichtungsvorrichtung enthält das Spannsystem Spanneinrichtungen mit mindestens einem Druckbalg, welche durch ein unter Druck stehendes Fluid (gasförmig oder flüssig) beaufschlagbar sind, und die die Längsdichtungselemente zusammendrückende mechanische Spannung erzeugen.

Die Spanneinrichtungen können Übersetzungshebel enthalten, welche zwischen den Druckbälgen und den an den Enden des Dichtungsrahmens angeordneten Längsdichtungselementen geschaltet sind und die von den Druckbälgen erzeugte Kraft verstärken.

Die Druckbälge können quer zur Längsrichtung des Dichtungsrahmens angeordnet sein und die Übersetzungshebel können als um ca. 90° gekröpfte, zweiseitige Hebel ausgebildet sein, welche zwischen den Druckbälgen und den Enden des Dichtungsrahmens drehbar gelagert angeordnet sind.

Die Querdichtungselemente können zwischen den an den Enden des Dichtungsrahmens befindlichen Längsdichtungselementen und den Spanneinrichtungen des Spannsystems angeordnet sein und mit unter die die Längsdichtungselemente zusammendrückende mechanische Spannung gesetzt werden.

Gemäß einer Weiterbildung der erfindungsgemäßen Dichtungsvorrichtung ist es vorgesehen, dass der Dichtungsrahmen für in der Längsausdehnung unterschiedlich große Brennstoffzellenstapel aus Gleichteilen hergestellt ist, welche in ihrer Länge so normiert sind, dass sie einer vorgegebenen Anzahl von Brennstoffzellen entsprechen.

Im Folgenden wird ein Ausführungsbeispiel der erfindungsgemäßen Dichtungsvorrichtung anhand der Zeichnung erläutert.

Es zeigen:
- Fig. 1 und 1a): eine Draufsicht bzw. eine vergrößerte Ausschnittsdarstellung von Längsdichtungselementen einer Dichtungsvorrichtung nach dem Stand der Technik;
- Fig. 2: eine perspektivische Darstellung einer Verbindung zwischen Längsdichtungselementen der in Fig. 1 und 1a) gezeigten Art nach dem Stand der Technik;
- Fig. 3: eine perspektivische Explosionsansicht einer Brennstoffzellenanordnung, bei der die Dichtungsvorrichtung gemäß einem Ausführungsbeispiel der Erfindung vorgesehen ist;
- Fig. 4: eine Draufsicht auf eine Dichtungsvorrichtung für eine Brennstoffzellenanordnung gemäß dem Ausführungsbeispiel der Erfindung;
- Fig. 5: eine vergrößerte Detaildarstellung eines hervorgehobenen mittleren Bereichs der in Fig. 4 gezeigten Dichtungsvorrichtung; und
- Fig. 6: eine Draufsicht und
- Fig. 7: eine perspektivische Ansicht eines hervorgehobenen Endbereichs der Dichtungsvorrichtung des in Fig. 4 gezeigten Ausführungsbeispiels.

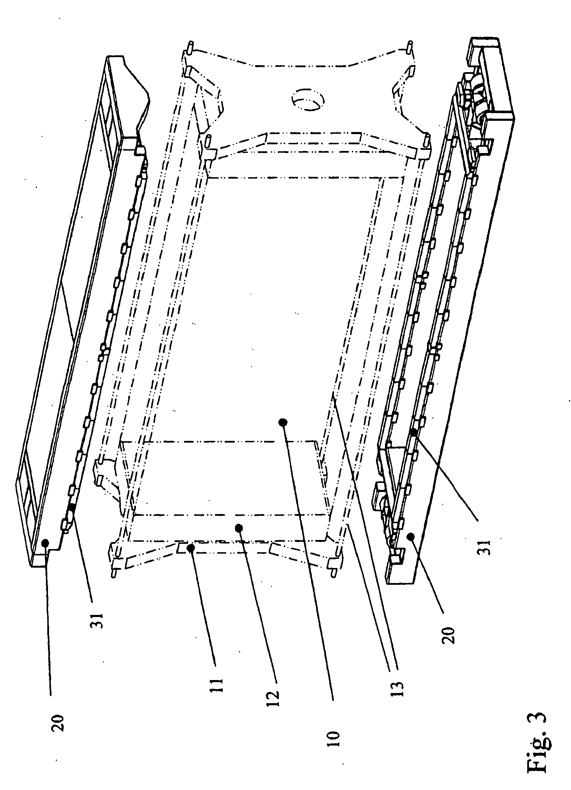

In Fig. 3 ist in einer perspektivischen Explosionsansicht etwas schematisiert eine Brennstoffzellenanordnung dargestellt, welche eine Vielzahl von zu einem Brennstoffzellenstapel 10 zusammengefassten Brennstoffzellen umfasst, die quer zur Längsrichtung des Brennstoffzellenstapels 10 von in den Brennstoffzellen umgesetzten Gasströmen durchströmbar sind, in Fig. 3 in vertikaler Richtung. Der Brennstoffzellenstapel 10 ist durch Spannstäbe 13 zwischen an den Enden des Brennstoffzellenstapels vorgesehenen Druckplatten 11 unter Zwischenlage von Endplatten 12 verspannt. An jeweils einander gegenüberliegenden Längsseiten des Brennstoffzellenstapels 10 ist jeweils ein Gasverteiler (Manifold) 20 vorgesehen, in Fig. 3 oben und unten, der zum Zu- und Abführen der an den Brennstoffzellen umgesetzten Gasströme, nämlich Brenngas, Oxidationsgas und Abgas, dient.

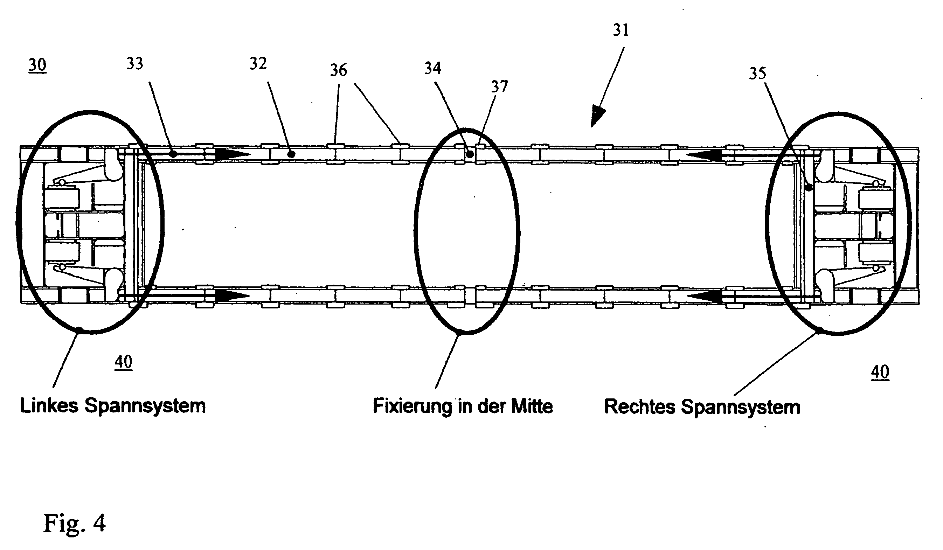

Zur Abdichtung zwischen dem Gasverteiler 20 und dem Brennstoffzellenstapel 10 ist eine insgesamt mit dem Bezugszeichen 30 versehene Dichtungsvorrichtung vorgesehen, die in Fig. 4 im Einzelnen in der Draufsicht dargestellt ist. Diese Dichtungsvorrichtung 30 ist am Gasverteiler 20 angebracht und zusammen mit diesem am Brennstoffzellenstapel 10 montierbar bzw. von diesem abnehmbar.

Die Dichtungsvorrichtung 30 umfasst einen Dichtungsrahmen 31, der eine Anzahl von Längsdichtungselementen 32, 33, 34 enthält, die dem Längsrand des Gasverteilers 20 folgend angeordnet sind und diesen gegen den entsprechenden Längsrand des Brennstoffzellenstapels 10 abdichten. An den den Enden des Brennstoffzellenstapels 10 zugeordneten Querrändern des Gasverteilers 20 sind Querdichtungselemente 35 vorgesehen, welche den Dichtungsrahmen 31 an dieser Stelle umfangsmäßig schließen. Die Dichtungselemente 32, 33, 34, 35 bestehen aus einem dielektrischen Material, welches geeignet ist, die einzelnen im Brennstoffzellenstapel 10 angeordneten Brennstoffzellen elektrisch gegeneinander zu isolieren.

Zum Ausgleich von insbesondere thermisch bedingten Relativbewegungen zwischen dem Brennstoffzellenstapel 10 und dem Gasverteiler 20, die insbesondere beim Aufheizen der Brennstoffzellenanordnung, typischerweise von Umgebungstemperatur auf ca. 650°C bzw. umgekehrt beim Abkühlen auftreten, sind die Längsdichtungselemente 32, 33, 34 zumindest teilweise in Längsrichtung beweglich angeordnet.

Die Längsdichtungselemente 32, 33, 34 des Dichtungsrahmens 31 sind jeweils stirnseitig spaltfrei dicht aneinander anliegend angeordnet, also jeweils die Stirnseite des einen Dichtungselements an der Stirnseite des anderen Dichtungselements, und es ist ein Spannsystem vorgesehen, welches zur Erzeugung einer die Längsdichtungselemente 32, 33, 34 in Längsrichtung zwischen den Enden des Dichtungsrahmens 31 zusammendrückenden mechanischen Spannung dient.

Bei dem in den Figuren dargestellten Ausführungsbeispiel enthält das Spannsystem an beiden Enden, bezüglich der Längsrichtung des Brennstoffzellenstapels 10, des Dichtungsrahmens 31 angeordnete Spanneinrichtungen 40, welche jeweils eine die Längsdichtungselemente 32, 33, 34 von den Enden des Dichtungsrahmens 31 bzw. des Brennstoffzellenstapels 10 her in Längsrichtung zur Mitte hin zusammendrückende mechanische Spannung erzeugen.

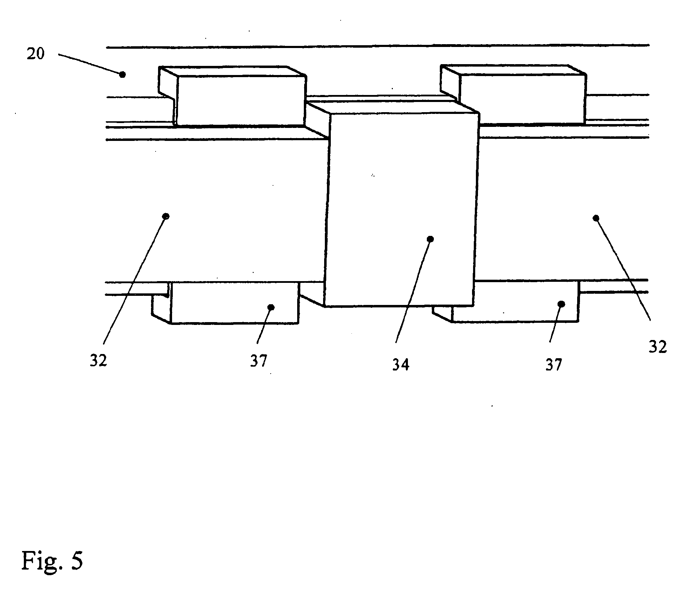

Wie Fig. 4 und insbesondere die vergrößerte Ausschnittsdarstellung in Fig. 5 zeigen, ist in der Mitte der Längsausdehnung des Dichtungsrahmens 31 ein Längsdichtungselement 34 unverschieblich oder ortsfest angeordnet, zu welchem hin die übrigen, längsbeweglich angeordneten Längsdichtungselemente 32, 33 von den Enden her zusammengedrückt werden.

Wie ebenfalls die Figuren 4 und 5 zeigen, sind die längsbeweglich angeordneten Längsdichtungselemente 32, 33 seitlich durch Führungselemente geführt, welche bei dem dargestellten Ausführungsbeispiel durch Anschläge 36, 37 gebildet sind, die beiderseits der Längsdichtungselemente 32, 33, 34 vorgesehen sind. Das in der Mitte befindliche ortsfest angeordnete Dichtungselement 34 ist durch die Anschläge 37 seitlich und in Längsrichtung fixiert.

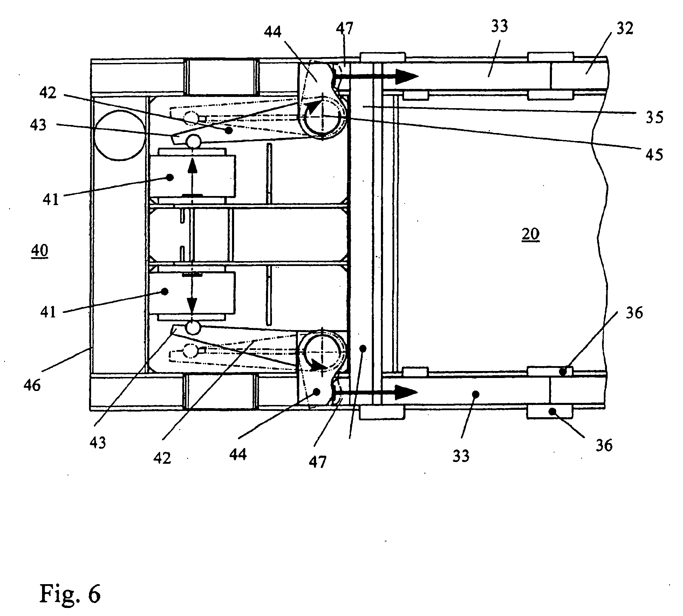

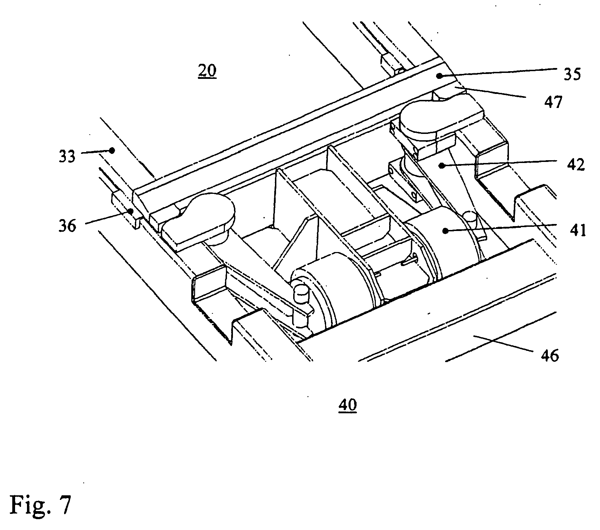

In den Figuren 6 und 7 ist in der Draufsicht bzw. perspektivisch eine Spanneinrichtung 40 des Spannsystems der Dichtungsvorrichtung 31 im Einzelnen gezeigt. Die Spanneinrichtung 40 ist in einem Gehäuse 46 am Ende des Gasverteilers 20 untergebracht und enthält jeweilige Druckbälge 41, welche durch ein unter Druck stehendes Fluid, wie Pressluft oder ein Hydraulikfluid beaufschlagbar sind und die die Längselemente 32, 33, 34 zusammendrückende mechanische Spannung erzeugen. Bei Druckbeaufschlagung erzeugt jeder Druckbalg 41 jeweils eine Bewegung in Richtung der an den Druckbälgen 41 gezeigten Pfeile. Die Druckbälge 41 sind mittels Übersetzungshebeln 42 mit den Längsseiten des Dichtungsrahmens 31 gekoppelt. Diese Übersetzungshebel 42 sind in Form von zweiseitigen Hebeln ausgebildet, die um ca. 90° gekröpft sind und mit einem längeren ersten Schenkel 43 am Druckbalg 41 anliegen und mit einem kürzeren zweiten Schenkel 44 auf die Dichtungselemente des Dichtungsrahmens31 einwirken.

Der Übersetzungshebel 42 ist um eine Lagerachse 45 in der durch die gekrümmten Pfeile dargestellten Weise drehbar gelagert und verstärkt die von den Druckbalgen 41 erzeugte -Kraft, die dann wie durch die beiden folgenden geraden Pfeile dargestellt auf die Dichtungselemente des Dichtungsrahmens 31 einwirken. Dies erfolgt mittelbar über die im Dichtungsrahmen 31 enthaltenen Querdichtungselemente 35 auf die an den Enden des Dichtungsrahmens 31 befindlichen Längsdichtungselemente 33. Die Querdichtungselemente 35 werden also von den Spanneinrichtungen 40 mit unter die die Längsdichtungselemente 32, 33, 34 zusammendrückende mechanische Spannung gesetzt, so dass auch hier eine zuverlässige Abdichtung sichergestellt ist. Zwischen den zweiten Schenkeln 44 der Übersetzungshebel 42 und dem Querdichtungselement 35 sind noch jeweilige Zwischenstücke 47 vorgesehen, welche zur Vergleichmäßigung der Krafteinwirkung und zur Verschleißminderung dienen.

Der Dichtungsrahmen 31 kann für in ihrer Längsausdehnung unterschiedlich große Brennstoffzellenstapel mit einer unterschiedlichen Anzahl von Brennstoffzellen aus Gleichteilen hergestellt sein, wenn die Länge der Teile des Dichtungsrahmens 31 und der Längsdichtungselemente 32, 33, 34 so normiert ist, dass sie einer vorgegebenen Anzahl von Brennstoffzellen entsprechen.

### Bezugszeichenliste

- 10: Brennstoffzellenstapel
- 11: Druckplatte
- 12: Endplatte
- 13: Spannstäbe
- 20: Gasverteiler (Manifold)
- 30: Dichtungsvorrichtung
- 31: Dichtungsrahmen
- 32: Längsdichtungselement
- 33: endseitiges Längsdichtungselement
- 34: mittleres Längsdichtungselement
- 35: Querdichtungselement
- 36: Anschlag, Führungselement
- 37: Anschlag, Führungselement
- 40: Spanneinrichtung
- 41: Druckbalg
- 42: Übersetzungshebel
- 43: erster Schenkel
- 44: zweiter Schenkel
- 45: Lagerachse
- 46: Gehäuse
- 47: Zwischenstück
- 52: Längsdichtungselement
- 53: Nutenleiste (Key) 54 Nut
- 55: Fixierbohrung
- 56: Fixierlangloch
- 57: Leckage

## Patentansprüche

1. Dichtungsvorrichtung für eine Brennstoffzellenanordnung mit einer Vielzahl von zu einem Brennstoffzellenstapel (10) zusammengefassten Brennstoffzellen, welche quer zur Längsrichtung des Brennstoffzellenstapels (10) von in den Brennstoffzellen umgesetzten Gasströmen durchströmbar sind, und einem an der Längsseite des Brennstoffzellenstapels (10) zum Zu- und Abführen der an den Brennstoffzellen umgesetzten Gasströme vorgesehenen Gasverteiler (20), wobei die Dichtungsvorrichtung einen Dichtungsrahmen (31) mit einer Anzahl von zwischen dem Längsrand des Gasverteilers (20) und dem Brennstoffzellenstapel (10) angeordneten, aus einem dielektrischen Material bestehenden Längsdichtungselementen (32, 33, 34), die zum Ausgleich von insbesondere thermisch bedingten Relativbewegungen zwischen Brennstoffzellenstapel (10) und Gasverteiler (20) in Längsrichtung beweglich angeordnet sind, umfasst,
**dadurch gekennzeichnet,**
**dass** die Längsdichtungselemente (32, 33, 34) jeweils stirnseitig spaltfrei dicht aneinander anliegend angeordnet sind, und dass ein Spannsystem mit Spanneinrichtungen (40) zur Erzeugung einer die Längsdichtungselemente (32, 33, 34) in Längsrichtung zwischen den Enden des Dichtungsrahmens (31) zusammendrückenden mechanischen Spannung vorgesehen ist.

2. Dichtungsvorrichtung nach Anspruch 1,
**dadurch gekennzeichnet,**
**dass** das Spannsystem an beiden Enden des Dichtungsrahmens (31) angeordnete Spanneinrichtungen (40) enthält, welche jeweils eine die Längsdichtungselemente (32, 33, 34) von den Enden des Dichtungsrahmens (31) her in Längsrichtung zur Mitte zusammendrückende mechanische Spannung erzeugen.

3. Dichtungsvorrichtung nach Anspruch 2,
**dadurch gekennzeichnet,**
**dass** ein Längsdichtungselement (34) in der Mitte der Längsausdehnung des Dichtungsrahmens (31) unverschieblich angeordnet ist, zu welchem hin die längsbeweglich angeordneten Dichtungselemente (32, 33) von den Enden zusammengedrückt werden.

4. Dichtungsvorrichtung nach Anspruch 1, 2 oder 3,
**dadurch gekennzeichnet,**
**dass** die längsbeweglich angeordneten Längsdichtungselemente (32, 33) durch Führungselemente (36, 37) seitlich geführt sind.

5. Dichtungsvorrichtung nach Anspruch 4,
**dadurch gekennzeichnet,**
**dass** die Führungselemente durch seitliche Anschläge (36, 37) gebildet sind.

6. Dichtungsvorrichtung nach Anspruch 3 und 5,
**dadurch gekennzeichnet,**
**dass** das in der Mitte befindliche unverschieblich angeordnete Dichtungselement (34) durch Anschläge (37) seitlich und in Längsrichtung fixiert ist.

7. Dichtungsvorrichtung nach einem der Ansprüche 1 bis 6,
**dadurch gekennzeichnet,**
**dass** das Spannsystem Spanneinrichtungen (40) mit Druckbalgen (41) enthält, welche durch ein unter Druck stehendes Fluid beaufschlagbar sind und die die Dichtungselemente (32, 33, 34) zusammendrückende mechanische Spannung erzeugen.

8. Dichtungsvorrichtung nach Anspruch 7,
**dadurch gekennzeichnet,**
**dass** die Spanneinrichtungen (40) Übersetzungshebel (42) enthalten, welche zwischen die Druckbälge (41) und die an den Enden des Dichtungsrahmens (31) angeordneten Längsdichtungselemente (33) geschaltet sind und die von den Druckbälgen (41) erzeugte Kraft verstärken.

9. Dichtungsvorrichtung nach Anspruch 8,
**dadurch gekennzeichnet,**
**dass** die Druckbälge (41) quer zur Längsrichtung des Dichtungsrahmens (31) angeordnet sind, und dass die Übersetzungshebel (42) als um ca. 90° gekröpfte, zweiseitige Hebel ausgebildet sind, welche zwischen den Druckbälgen (41) und den Enden des Dichtungsrahmens (31) drehbar gelagert angeordnet sind.

10. Dichtungsvorrichtung nach einem der Ansprüche 1 bis 9,
**dadurch gekennzeichnet,**
**dass** Querdichtungselemente (35) zwischen den an den Enden des Dichtungsrahmens (31) befindlichen Längsdichtungselementen (33) und den Spanneinrichtungen (40) des Spannsystems angeordnet sind und mit unter die die Längsdichtungselemente (32, 33, 34) zusammendrückende mechanische Spannung gesetzt werden.

11. Dichtungsvorrichtung nach einem der Ansprüche 1 bis 10,
**dadurch gekennzeichnet,**
**dass** der Dichtungsrahmen (31) für in der Längsausdehnung unterschiedlich große Brennstoffzellenstapel (10) aus gleichen Längsdichtungselementen (32) hergestellt ist, welche in ihrer Länge so normiert sind, dass sie einer vorgegebenen Anzahl von Brennstoffzellen entsprechen.

## Claims

1. Sealing device for a fuel cell arrangement with a multiplicity of fuel cells which are combined to form a fuel cell stack (10) and through which streams of gas converted in the fuel cells can flow transversely in relation to the longitudinal direction of the fuel cell stack (10), and with a gas distributor (20), which is provided on the longitudinal side of the fuel cell stack (10) for supplying and removing the streams of gas converted at the fuel cells, the sealing device comprising a sealing frame (31) with a number of longitudinal sealing elements (32, 33, 34), which are arranged between the longitudinal edge of the gas distributor (20) and the fuel cell stack (10), consist of a dielectric material and are arranged movably in the longitudinal direction to compensate for relative movements, in particular thermally induced relative movements, between the fuel cell stack (10) and the gas distributor (20), **characterized in that** the longitudinal sealing elements (32, 33, 34) are arranged lying closely one against the other without any gaps respectively at their end faces, and **in that** a clamping system with clamping devices (40) is provided for producing mechanical clamping that presses the longitudinal sealing elements (32, 33, 34) together in the longitudinal direction between the ends of the sealing frame (31).

2. Sealing device according to Claim 1, **characterized in that** the clamping system includes clamping devices (40), which are arranged at both ends of the sealing frame (31) and respectively produce mechanical clamping that presses the longitudinal sealing elements (32, 33, 34) together in the longitudinal direction from the ends of the sealing frame (31) towards the middle.

3. Sealing device according Claim 2, **characterized in that** a longitudinal sealing element (34) is arranged immovably in the middle of the longitudinal extent of the sealing frame (31), towards which the longitudinally arranged sealing elements (32, 33) are pressed together from the ends.

4. Sealing device according to Claim 1, 2 or 3, **characterized in that** the longitudinally movably arranged longitudinal sealing elements (32, 33) are laterally guided by guiding elements (36, 37).

5. Sealing device according to Claim 4, **characterized in that** the guiding elements are formed by lateral stops (36, 37).

6. Sealing device according to Claims 3 and 5, **characterized in that** the immovably arranged sealing element (34) located in the middle is fixed laterally and in the longitudinal direction by stops (37).

7. Sealing device according to one of Claims 1 to 6, **characterized in that** the clamping system includes clamping devices (40) with pressure bellows (41), to which a pressurized fluid can be admitted and which produce the mechanical clamping that presses together the sealing elements (32, 33, 34).

8. Sealing device according to Claim 7, **characterized in that** the clamping devices (40) include transmission levers (42), which are disposed between the pressure bellows (41) and the longitudinal sealing elements (33) arranged at the ends of the sealing frame (31) and intensify the force produced by the pressure bellows (41).

9. Sealing device according to Claim 8, **characterized in that** the pressure bellows (41) are arranged transversely in relation to the longitudinal direction of the sealing frame (31), and **in that** the transmission levers (42) are formed as first-class levers offset by about 90°, which are arranged such that they are pivotably mounted between the pressure bellows (41) and the ends of the sealing frame (31).

10. Sealing device according to one of Claims 1 to 9, **characterized in that** transverse sealing elements (35) are arranged between the longitudinal sealing elements (33) located at the ends of the sealing frame (31) and the clamping devices (40) of the clamping system and are also subjected to the mechanical clamping that presses the longitudinal sealing elements (32, 33, 34) together.

11. Sealing device according to one of Claims 1 to 10, **characterized in that** the sealing frame (31) for fuel cell stacks (10) of different sizes in the longitudinal extent is produced from the same longitudinal sealing elements (32), which are standardized in their length such that they correspond to a prescribed number of fuel cells.

## Revendications

1. Dispositif d'étanchéité pour un agencement de piles à combustible comportant une pluralité de piles à combustible rassemblées en un empilement de piles à combustible (10), qui peut être traversé transversalement à la direction longitudinale de l'empilement de piles à combustible (10) par des flux de gaz convertis dans les piles à combustible, et un distributeur de gaz (20) prévu sur le long côté de l'empilement de piles à combustible (10) pour l'arrivée et l'évacuation des flux de gaz convertis dans les piles à combustible, dans lequel le dispositif d'étanchéité comprend un cadre d'étanchéité (31) avec plusieurs éléments d'étanchéité longitudinaux (32, 33, 34) composés d'un matériau diélectrique et disposés entre le bord longitudinal du distributeur de gaz (20) et l'empilement de piles à combustible (10), qui sont disposés de façon mobile en direction longitudinale pour compenser des mouvements relatifs, en particulier d'origine thermique, entre l'empilement de piles à combustible (10) et le distributeur de gaz (20), **caractérisé en ce que** les éléments d'étanchéité longitudinaux (32, 33, 34) sont disposés en application étanche l'un contre l'autre chaque fois sans espacement côté frontal, et **en ce qu'**il est prévu un système de serrage avec des dispositifs de serrage (40) pour la production d'une contrainte mécanique comprimant les éléments d'étanchéité longitudinaux (32, 33, 34) en direction longitudinale entre les extrémités du cadre d'étanchéité (31).

2. Dispositif d'étanchéité selon la revendication 1, **caractérisé en ce que** le système de serrage comprend des dispositifs de serrage (40) disposés aux deux extrémités du cadre d'étanchéité (31) qui produisent respectivement une contrainte mécanique comprimant les éléments d'étanchéité longitudinaux (32, 33, 34) en direction longitudinale à partir des extrémités du cadre d'étanchéité (31) vers le milieu.

3. Dispositif d'étanchéité selon la revendication 2, **caractérisé en ce qu'**un élément d'étanchéité longitudinal (34) est disposé de façon immobile au milieu de la dimension longitudinale du cadre d'étanchéité (31), en direction duquel les éléments d'étanchéité (32, 33) disposés de façon mobile longitudinalement sont comprimés à partir des extrémités.

4. Dispositif d'étanchéité selon la revendication 1, 2 ou 3, **caractérisé en ce que** les éléments d'étanchéité longitudinaux (32, 33) disposés de façon mobile longitudinalement sont guidés latéralement par des éléments de guidage (36, 37).

5. Dispositif d'étanchéité selon la revendication 4, **caractérisé en ce que** les éléments de guidage sont formés par des butées latérales (36, 37).

6. Dispositif d'étanchéité selon la revendication 3 et 5, **caractérisé en ce que** l'élément d'étanchéité (34) disposé de façon immobile et se trouvant au milieu est fixé latéralement et en direction longitudinale au moyen de butées (37).

7. Dispositif d'étanchéité selon l'une quelconque des revendications 1 à 6, **caractérisé en ce que** le système de serrage comprend des dispositifs de serrage (40) avec des soufflets sous pression (41), qui peuvent être alimentés en fluide sous pression et qui produisent la contrainte mécanique comprimant les éléments d'étanchéité (32, 33, 34).

8. Dispositif d'étanchéité selon la revendication 7, **caractérisé en ce que** les dispositifs de serrage (40) comprennent des leviers de transmission (42), qui sont montés entre les soufflets sous pression (41) et les éléments d'étanchéité longitudinaux (33) disposés aux extrémités du cadre d'étanchéité (31) et qui accroissent la force produite par les soufflets sous pression (41).

9. Dispositif d'étanchéité selon la revendication 8, **caractérisé en ce que** les soufflets sous pression (41) sont disposés transversalement à la direction longitudinale du cadre d'étanchéité (31), et **en ce que** les leviers de transmission (42) se présentent sous la forme de leviers à deux côtés, coudés à environ 90°, qui sont montés de façon rotative entre les soufflets sous pression (41) et les extrémités du cadre d'étanchéité (31).

10. Dispositif d'étanchéité selon l'une quelconque des revendications 1 à 9, **caractérisé en ce que** des éléments d'étanchéité transversaux (35) sont disposés entre les éléments d'étanchéité longitudinaux (33) se trouvant aux extrémités du cadre d'étanchéité (31) et les dispositifs de serrage (40) du système de serrage et sont placés aussi sous la contrainte mécanique comprimant les éléments d'étanchéité longitudinaux (32, 33, 34).

11. Dispositif d'étanchéité selon l'une quelconque des revendications 1 à 10, **caractérisé en ce que** le cadre d'étanchéité (31) est fabriqué à partir d'éléments d'étanchéité longitudinaux identiques (32) pour des empilements de piles à combustible (10) de dimension longitudinale différente, et dont la longueur est normalisée de telle manière qu'ils correspondent à un nombre prédéterminé de piles à combustible.
